# EUROPÄISCHE PATENTSCHRIFT

(11) **EP 0 459 224 B1**
(45) Veröffentlichungstag und Bekanntmachung des Hinweises auf die Patenterteilung: **16.08.1995**
(21) Anmeldenummer: 91107880.6
(22) Anmeldetag: 15.05.1991
(51) Int. Cl.: G05D 15/01, B30B 15/14, B30B 15/28

(54) **Verfahren zum Betrieb einer Presse**
Operation method of a press
Méthode d'actionnement d'une presse

(30) Priorität: 31.05.1990 DE 4017598
(43) Veröffentlichungstag der Anmeldung: 04.12.1991
(73) Patentinhaber: SIEMENS AKTIENGESELLSCHAFT, 80333 München (DE)
(72) Erfinder: Jartyn, Hermann, Dipl.-Ing. (FH), W-8602 Burghaslach (DE); Pachtner, Dieter, Dipl.-Ing.(FH), W-8500 Nürnberg (DE)

(56) Entgegenhaltungen:
- EP-A- 0 304 623
- EP-A- 0 319 894
- FR-A- 2 567 072
- US-A- 4 116 050
- PATENT ABSTRACTS OF JAPAN Band 12, Nr. 448 (M- 786)(3295), 24.November 1988;&JP-A-63180400 (NKK CORP.) 26.07.1988

## Beschreibung

Die Erfindung betrifft ein Verfahren zum Betrieb einer Presse, bei dem eine fortlaufend alternierende Bewegung eines ersten Werkzeugs gegenüber einem zweiten Werkzeug zwischen einem ersten und einem zweiten Totpunkt erfolgt und wobei Mittel zur Erfassung der Preßkraft vorgesehen sind.

Derartige Verfahren sind bei handeslüblichen Pressen gebräuchlich. Das Auslösen eines Arbeitshubs kann dabei entweder über konventionelle mechanische Nockenschaltwerke erfolgen oder aber dies kann mit Hilfe von elektronischen Nockenschaltwerken geschehen, wie diese beispielsweise aus der DE-OS 35 28 922 bekannt sind.

Ferner ist aus der EP-A-304 623 ein Verfahren zum Betrieb einer Presse bekannt, wobei Mittel zum Erfassen der Preßkraft zwischen zwei Werkzeugen vorgesehen sind, die fortlaufend alternierende Relativbewegungen zwischen zwei Totpunkten ausführen. Desweiteren ist aus EP-A 319 894 eine Schneidmaschine mit Erfassung der Messerschneidkraft bekannt.

Bei längeren Produktionszyklen hat es sich gezeigt, daß die Preßkraft Schwankungen unterliegt. Diese können aufgrund von Verschleiß an der Presse, z. B. allmählicher Werkzeugabnutzung, und durch unterschiedlich gewaltzte Bleche auftreten. Wenn der Bediener einer Presse anhand der Gestalt der Preßteile feststellt, daß die Preßkraft auswandert, z. B. zu klein wird, ist es bislang üblich, zur Korrektur die jeweilige Werkzeuglage zu variieren. Dieses Beobachten des Betriebsablaufes kann jedoch stets nur eine grobe Aussage über die Größe der Änderung der Preßkraft geben, so daß es durchaus erforderlich werden kann, mehrfach Korrekturen der Lage vorzunehmen, um die Qualität der Werkstücke zu optimieren. Demzufolge muß bislang stets mit einem gewissen Ausschuß an Werkstücken gerechnet werden.

Aufgabe der Erfindung ist es, ein Verfahren der eingangs genannten Art so auszubilden, daß eine möglichst hohe Konstanz der Preßkraft während des Betriebs gewährleistet ist.

Gemäß der Erfindung wird diese Aufgabe dadurch gelöst, daß jeweils für eine Anzahl u, u ≧ 2 aufeinanderfolgender Hübe der Spitzenwert der Preßkraft gemittelt wird, daß diese gemittelte Ist-Kraft mit einer werkstückbezogenen Soll-Kraft verglichen wird und daß entsprechend der Differenz zwischen Ist- und Soll-Kraft ein Regler die Lage des unteren Totpunktes regelt. Diese Regelung kann prinzipiell so erfolgen, daß bei gleichem Hub die untere Totpunktlage verschoben wird oder daß die untere Totpunktlage durch eine Variation des Hubes beeinfluß wird. Prinzipiell wäre aber auch ein Verstellen der Lage des Unterwerkzeugs möglich.

Der Erfindung liegt dabei die Erkenntnis zugrunde, daß für eine dem Pressenbetrieb angemessene Regelung eine über mehrere Hübe gemittelte Erfassung des Spitzenwertes der Preßkraft vorteilhaft ist, weil dann einzelne kurzzeitige "Meßwertausreißer", wie diese beispielweise durch Inhomogenitäten des Bleches bedingt sein können, nicht störend zum Tragen kommen.

Eine erste Ausbildung der Erfindung ist dadurch gekennzeichnet, daß die mittlere Ist-Kraft aus den bis dahin erfolgten Hüben gebildet wird, wenn deren Anzahl K Kleiner als die Anzahl u ist. Damit ist auch während des Anlaufes der Presse bereits eine Lageregelung möglich. Der Wert von K sollte dabei zweckmäßigerweise größer al "l" sein.

Wenn dabei die ausgeregelte Lage auf ein Einhalten vorgegebenen Grenzwerte überwacht wird, ist es möglich, das Betriebsverhalten der Presse ständig zu beobachten, so daß beispielsweise eine allmähliche Werkzeugabnutzung, deren Einfluß auf das Werkstück von der Presse ausgeregelt wird, feststellbar ist. So kann dann, wenn damit zu rechnen ist, daß in Kürze ein Ausregeln auf die Soll-Kraft nicht mehr möglich ist, vom Wartungspersonal eine entsprechende Maßnahmen, z.B. ein Werkzeugtausch, vorgenommen werden.

Dadurch, daß Mittel zum Vorgeben des Wertes von n vorgesehen sind, kann das Zeitfenster, innerhalb dessen die Ist-Kräfte gemittelt werden, leicht variiert werden.

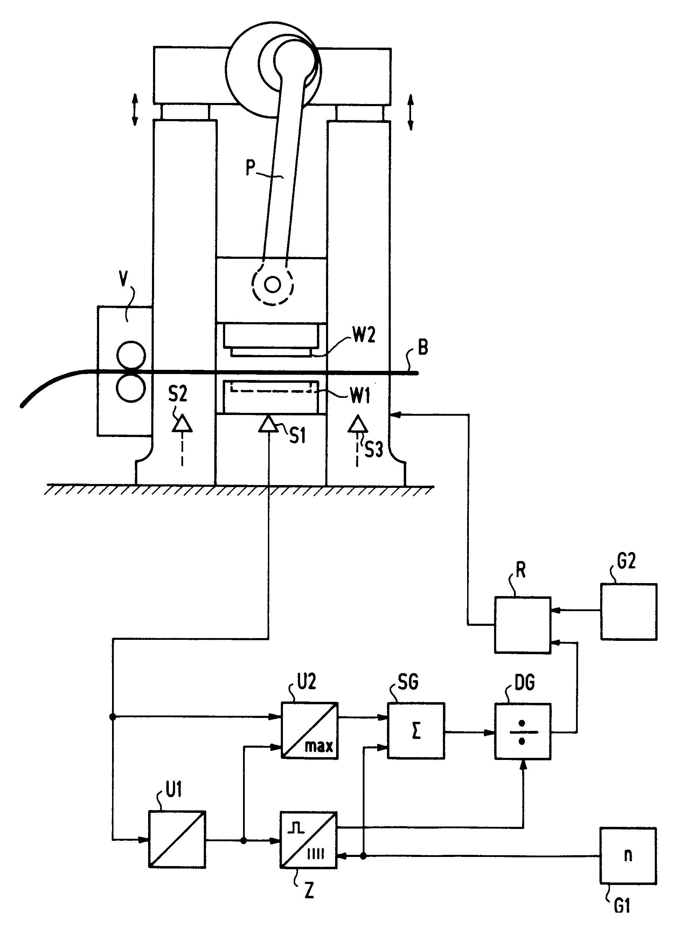

Ein Ausführungsbeispiel der Erfindung ist in der Zeichnung dargestellt und wird im folgenden näher erläutert.

In der Darstellung ist in Form einer Prinzipskizze eine mechanische Presse dargestellt, bei der zwei Werkzeuge W1 und W2 zyklisch gegeneinander gepreßt werden, so daß aus einem Blech B die entsprechenden Werkstücke geformt werden. Der dazu erforderliche Vorschub des Bleches B wird dabei über eine Vorschubeinrichtung V bewerkstelligt, die stets dann das Blech B verschiebt, wenn sich die Werkzeuge W1 und W2 nicht im Eingriff befinden. Während das Werkzeug W1 als Unterwerkzeug stationär ist, wird das Werkzeug W2 mit Hilfe einer exzentrisch gelagerten Pleullstange P alternierend auf- und abbewegt. Zur Anpassung der Presse an verschiedene Bearbeitungsvorgänge ist es möglich, die Säulen der Presse - wie durch Doppelpfeile angedeutet - in ihrer Höhe zu verstellen, was dazu führt, daß der obere und der für den Preßvorgang entscheidende untere Totpunkt der Bewegung des Werkstückes W2 in gleicher Weise mit verschoben werden. Ferner ist es aber auch möglich, die Lagerung der Pleullstange P so in ihrer Exzentrität zu verstellen, daß die Amplitude der Hubbewegung variiert wird, wodurch ebenfalls der untere Totpunkt beeinflußbar ist.

Im Bereich des Werkzeuges W1 ist ein Sensor S1 angeordnet, der in der Darstellung durch ein Dreieck angedeutet ist. Dieser Sensor S1 stellt die jeweilige Preßkraft des Werkzeugs W2 gegenüber dem Wekzeug W1 fest, indem der Druck des Preßvorgangs gemessen wird. Zwischen dem Druck und der Preßkraft besteht dabei ein werkstückspezifischer, jeweils fest vorgegebener Zusammenhang. Wenn im folgenden stets von der Preßkraft die Rede ist, wäre es somit selbstverständlich auch möglich, diese Maßnahmen auf den Preßdruck zu übertragen.

Anstelle eines einzigen Sensors S1 zum Erfassen der resultierenden Preßkraft wäre selbstverständlich auch möglich, zwei Sensoren S2 und S3 in den Säulen der Presse anzuordnen, deren Summensignal Aufschluß über die resultierende Preßkraft geben würde. Welche dieser Anordnungen zum Tragen kommt, steht dabei im jeweiligen Ermessen des Anwenders. Möglich wäre auch ein Heranziehen beider Meßverfahren, um eine möglichst gute Erfassung der Preßkraft zu ermöglichen.

Die Ausgangssignale des Sensors S1 gelangen an Umsetzer U1 und U2 sowie bedarfsweise an der Übersichtlichkeit halber nicht dargestellte weitere Anzeige- und Verarbeitungseinrichtungen. Der Umsetzer U1 löst jedesmal dann, wenn der Druck, der vom Sensor S1 erfaßt wird, sein Maximum erreicht hat, einen Impuls an seinem Ausgang aus, der zum einen den Umsetzer U2 veranlaßt, den jeweils zu diesem Zeitpunkt aktuellen Wert der Preßkraft als Maximalwert festzuhalten und der zum anderen einen Zähler Z hochzählt. Dieser Zähler Z möge zu Beginn des Betriebes der Presse über nicht dargestellte Rücksetzeinrichtungen jeweils auf einen Wert "0" gesetzt sein. Das heißt, daß nach dem ersten Arbeitshub der Presse der Zähler Z den Wert "1" annimmt und am Umsetzer U2 ausgangsseitig der Preßkraftwert für den ersten Preßvorgang vorliegt. Dieser Preßkraftwert wird einem Summierglied SG zugeleitet, das zu Beginn der Bewegung über ebenfalls der Übersichtlichkeit halber nicht dargestellte Rücksetzglieder in eine Grundstellung "0" gesetzt worden ist. Der Inhalt des Summiergliedes SG wird einem Dividierglied DG zugeleitet, das dazu dient, das im Summierglied SG ermittelte Ergebnis durch einen Faktor zu dividieren, der durch den Zählerstand des Zähler Z gegeben ist. Dabei ist das Summierglied SG so ausgebildet, daß es jeweils geeignet ist, die jeweils n letzten vom Umsetzer U2 ermittelten Preßkraftwerte für die zumittelnde Preßkraft zu summieren. Der Wert n wird dabei dem Summierglied über einen Geber G1 mitgeteilt, der auch das Hochzählen des Zählers über einen Wert n hinaus verhindert.

Nach einem Preßvorgang steht somit im Summierglied SG der Preßkraftwert für den ersten Preßvorgang an und vom Zähler Z ist ein Wert "1" ermittelt worden. Demzufolge leitet das Dividierglied DG den Preßkraftwert im Anschluß an den ersten Preßvorgang als mittleren Positionswert einem Regler R weiter (sofern nicht erst mindestens k größer "1" Hübe erfolgt sein sollten, um Meßwertausreißer zu unterdrücken). Ferner wird dem Regler R von einem Geber G2 ein Sollwert für die anzustrebende Preßkraft mitgeteilt. Entsprechend der Differenz dieser beiden Werte wird vom Regler R ein Eingriff an die Presse veranlaßt, der beispielsweise so erfolgt, daß die Presse in ihren Säulen wie durch die Doppelpfeile angedeutet wird, verstellt wird. Die Lage der Presse kann durch der Übersichtlichkeit halber nicht gezeigte Anzeigegeräte visualisiert werden. Ferner kann die Lage über ebenfalls der Übersichtlichkeit halber nicht dargestellter Schwellwertstufen überwacht werden, deren Ansprechen dem Bediener auf den Umstand hinweist, daß der zulässige Regelbereich momentan oder in kürze überschritten wird.

Nach zwei Preßvorgängen würde im Summierglied SG die Summe der ersten zwei Preßkraftwerte anstehen und dem Zähler Z wäre ein Wert "2" ermittelt worden. Demzufolge würde das Dividierglied DG unter Ansetzen des Teilers "2" den mittleren Preßkraftwert ermitteln. Für alle Werte k, die kleiner als n sind, wäre dieser Vorgang entsprechend fortzusetzen. Die Genauigkeit, mit der der mittlere Wert für die Preßkraft erfaßt wird, ist dabei fortlaufend ansteigend.

Ab Erreichen eines Wertes n, wie dieser seitens des Gebers G1 vorgegeben ist, wird dann das Fenster festgehalten, über das der jeweilige mittlere Preßdruck gemittelt wird. Die Größe des Wertes n gibt damit eine Zeitkonstante zur Mittelwertbildung vor. Je nach Maschinentyp und Dynamik der Störgrößen kann der Wert n über den Geber G1 eingestellt werden.

Die durch Quadrate angedeuteten Funktionsblöcke können dabei durchaus integrale Bestandteile einer numerischen Steuerung sein.

## Patentansprüche

1. Verfahren zum Betrieb einer Presse, bei dem eine fortlaufend alternierende Bewegung eines ersten Werkzeugs (W2) gegenüber einem zweiten Werkzeug (W1) zwischen einem ersten und einem zweiten Totpunkt erfolgt und wobei Mittel (S1) zur Erfassung der Preßkraft vorgesehen sind, **dadurch gekennzeichnet,** daß jeweils für eine Anzahl n, n≧2 aufeinanderfolgender Hübe der Spitzenwert der Preßkraft gemittelt wird, daß diese gemittelte Ist-Kraft mit einer werkstückbezogenen Soll-Kraft verglichen wird und daß entsprechend der Differenz zwischen Ist- und Soll-Kraft ein Regler (R) die Lage des unteren Totpunktes regelt.

2. Verfahren nach Anspruch 1, **dadurch gekennzeichnet,** daß die mittlere Ist-Kraft aus den bis dahin erfolgten Hüben gebildet wird, wenn deren Anzahl k Kleiner als die Anzahl n ist.

3. Verfahren nach einem der vorstehenden Ansprüche, **dadurch gekennzeichnet,** daß Mittel (G1) zum Vorgeben des Wertes von der Anzahl n vorgesehen sind.

## Claims

1. Method for the operation of a press, where a continuously alternating movement of a first tool (W2) relative to a second tool (W1) between a first and a second dead centre takes place and whereby means (S1) are provided to measure the pressing force, characterized in that in each case for a number n, n ≧ 2 of successive lifts the peak value of the pressing force is averaged, in that this averaged actual force is compared with a workpiece-related desired force and in that according to the difference between the actual force and the desired force a controller (R) controls the position of the lower dead centre.

2. Method according to claim 1, characterized in that the average actual force is formed from the lifts which have taken place up until then if their number k is smaller than the number n.

3. Method according to one of the above claims, characterized in that means (G1) are provided to specify the value of the number n.

## Revendications

1. Procédé d'utilisation d'une presse, selon lequel un déplacement alternatif permanent d'un premier outil (W2) par rapport à un second outil (W1) s'effectue entre des premier et second points morts et selon lequel des moyens (S1) sont prévus pour détecter la force de pression, caractérisé par le fait qu'on forme la moyenne de la valeur maximale de la force de pression, respectivement pour un nombre n de courses successives, n ≧ 2, que l'on compare cette force réelle moyenne à une force de consigne rapportée à l'outil et qu'un régulateur (R) règle la position du point mort bas en fonction de la différence entre la force réelle et la force de consigne.

2. Procédé suivant la revendication 1, caractérisé par le fait que la force réelle moyenne est formée sur les courses exécutées jusqu'alors, lorsque leur nombre k est inférieur au nombre n.

3. Procédé suivant l'une des revendications précédentes, caractérisé par le fait que des moyens (G1) sont prévus pour prédéterminer la valeur du nombre n.
